# EUROPEAN PATENT APPLICATION

(11) **EP 3 790 181 A1**
(43) Date of publication of application: **10.03.2021**
(21) Application number: 19196207.5
(22) Date of filing: 09.09.2019
(51) Int. Cl.: H02M 7/483, H02M 1/32

(54) **MODULAR MULTILEVEL CONVERTER**

(71) Applicant: Siemens Aktiengesellschaft, 80333 München (DE)
(72) Inventor: Robinson, Jonathan, 90489 Nürnberg (DE)

(57) **Abstract**

A modular multilevel converter for converting between a DC voltage and an AC voltage, comprising at least one phase unit, the phase unit comprising:
- three terminals, wherein a first and second of the terminals are connectable to the DC voltage,
- an upper converter arm and a lower converter arm, each converter arm having one or more cells being arranged in series, wherein each cell comprises a cell capacitor and a switching arrangement adapted to switching the cell capacitor in or out of the series of cells,
- a capacitor series of one or more capacitors, wherein the upper converter arm, the capacitor series and the lower converter arm are arranged in a series connection between the first and second terminal,
- a switch series comprising an upper switch arrangement in series with a lower switch arrangement, the switch series being arranged parallel to the capacitor series, the connection point between the upper and lower switch arrangement forming the third terminal of the phase unit.

## Description

The present invention relates to a modular multilevel converter. The present invention also relates to a method of operation for the modular multilevel converter.

Modular multilevel converters are a comparatively recent and attractive solution for power conversion without transformers. Some of their advantages are a high scalability, lesser or no need for AC filters and lesser or no need for DC link capacitors at the DC bus. A disadvantage of MMC is their size which is brought on by the large number of converter cells having at least one capacitor each, the capacitor being the biggest element in a cell.

The objective of the present invention is to provide an improved modular multilevel converter with a decreased size.

A modular multilevel converter for converting between a DC voltage and an AC voltage in accordance with the invention comprises at least one phase unit. The phase unit in turn comprises three terminals, wherein a first and second of the terminals are connectable to the DC voltage, and an upper converter arm and a lower converter arm, each converter arm having one or more cells being arranged in series, wherein each cell comprises a cell capacitor and a switching arrangement adapted to switching the cell capacitor in or out of the series of cells. The phase unit further comprises a capacitor series of one or more capacitors, wherein the upper converter arm, the capacitor series and the lower converter arm are arranged in a series connection between the first and second terminal. A switch series comprising an upper switch arrangement in series with a lower switch arrangement is arranged parallel to the capacitor series, the connection point between the upper and lower switch arrangement forming the third terminal of the phase unit, the third terminal being connectable to the AC voltage.

The invention is based on the idea that the capacitor series can be used to either support the lower converter arm or the upper converter arm, depending on the AC voltage. For a regular modular multilevel converter with N cells in the upper converter arm and another N cells in the lower converter arm the number of AC output voltage steps is N + 1. The modular multilevel converter according to the invention has N + 2 output voltage steps instead. This increase is reached with the switch series and the capacitor series instead of two additional cells. This results in an overall reduction of the number of devices used in the modular multilevel converter. In particular, the number of capacitors may be reduced, resulting in a reduced size of the modular multilevel converter.

Further features that may be added alone or together in exemplary embodiments of the invention include:
- The upper switch arrangement and the lower switch arrangement may each comprise a semiconductor switch. In one embodiment, the upper and lower switch arrangement each consist of exactly one semiconductor switch or of two or more switches acting as a single switch, for example two or more parallel switches switched in unison to emulate a single switch of enhanced current capability. In addition, the capacitor series may consist of exactly one capacitor. In other words, in this embodiment of the least complexity the upper and lower converter arm are connected across a parallel circuit of a single capacitor and a half-bridge. Returning to the example of a modular multilevel converter with N cells in each of the upper and lower converter arm, the number of devices in the AC current path of this embodiment is still equal to N, but for the DC current there are N - 2 devices in the conduction path, resulting in lower conduction losses. This is due to the DC current bypassing the two semiconductor switches of the half-bridge, passing only through the series capacitor which has relatively minor conduction losses compared to the devices.
- The modular multilevel converter may comprise one or more additional switch series of two semiconductor switches each, wherein the additional switch series are arranged in parallel to each other and to the switch series, the converter further comprising a control unit adapted to control the semiconductor switches of the switch arrangements for interleaved operation. In this embodiment the number of possible voltage levels is increased together with the current capability of the switch series. In another embodiment, the additional switch series is used as a backup for the switch series. When one or more of the semiconductor switches of the switch series fails the additional switch series can be used to keep the modular multilevel converter operational. In this way reliability of the converter is increased.
- The modular multilevel converter may further comprise a first bridge switch between the middle point of the switch series and the AC terminal and a second bridge switch between the middle point of the additional switch series and the AC terminal. These bridge switches allow disconnecting the switch series and the additional switch series, respectively. Thus a short circuit in either upper or lower switch arrangement can be controlled by disconnecting that particular switch series. This enhances the reliability of the modular multilevel converter. Achieving the same reliability without the bridge switches would require additional switches, creating higher losses.
- The upper switch arrangement and the lower switch arrangement may each comprise two semiconductor switches connected in series. In addition, the capacitor series may comprise two capacitors, a series connection of two diodes may connect the midpoint between the two semiconductor switches of the upper switch arrangement to the midpoint between the two semiconductor switches of the lower switch arrangement and the midpoint between the diodes may be connected to the midpoint between the capacitors of the capacitor series. In this embodiment the upper and lower converter arm are connected across an internal neutral-point clamped (NPC) type circuit. The NPC circuit can generate three voltage levels, adding to the number of voltage levels the converter can generate at a reduced cost in components and its size.
- In an alternative embodiment to the internal NPC, the upper switch arrangement and the lower switch arrangement each comprise two semiconductor switches connected in series. A flying capacitor then connects the midpoint between the two semiconductor switches of the upper switch arrangement to the midpoint between the two semiconductor switches of the lower switch arrangement. In this embodiment the upper and lower converter arm are connected across a flying capacitor multilevel converter. Like the internal NPC, this internal multilevel converter can also generate three voltage levels, adding to the number of reachable voltage levels. This again decreases the number of cells necessary to reach the same number of voltage levels with the modular multilevel converter, reducing its size.
- The capacitors of said capacitor series may have a smaller capacity than the cell capacitors of the lower or upper converter arm. This reduces the size of the series capacitors and thus the overall size of the modular multilevel converter.
- The semiconductor switches of the upper and lower switch arrangement may be optimized for low conduction losses. Since the switching frequency of those switches will be lower than that of the cell switches, electrical losses will for the most part be conduction losses. Optimizing the switches for conduction losses will therefore reduce overall losses and increase efficiency of the modular multilevel converter. For example, the upper and lower switch arrangement may each comprise one or more thyristors with reverse diodes. The switch arrangements may switch at double the network frequency.
- The modular multilevel converter may be arranged for three phase AC conversion by having three or more of said phase units arranged in parallel.
- The switch arrangements may each comprise one or more diodes. Especially when the modular multilevel converter is used as a rectifier, using diodes makes the modular multilevel converter cheaper and simpler in setup and operation.
- The modular multilevel converter may comprise a controlling means which may take the form of a microcontroller such as an FPGA, adapted to control said upper and lower switch arrangements.

The invention also provides a method for operating the modular multilevel converter, wherein the upper switch arrangement is turned on when the lower converter arm voltage is higher than the upper converter arm voltage, and the lower switch arrangement is turned on when the lower converter arm voltage is lower than the upper converter arm voltage. Preferentially the other of the upper and lower switch arrangements is turned off.

During operation, the modular multilevel converter may be connected to a DC network with the first two terminals of each phase unit, the phase units being arranged in parallel and to an AC network with the third terminals of the phase units. Said networks may be loads or supply networks or any other sort of electrical network.
- Preferentially the control unit switches the switch arrangements with a frequency that is twice the AC voltage frequency.
- The control unit may control the switch arrangements such that the individual switches are turned on and/or off when their voltage is zero thus reducing switching losses.

Embodiments of the present invention are now described with reference to the accompanying drawings to which the invention is not limited.
Fig. 1 illustrates a modular multilevel converter according to the prior art;
Figs. 2 and 3 illustrate examples of converter cells;
Fig. 4 illustrates a phase unit of a modular multilevel converter according to an embodiment of the invention;
Fig. 5 illustrates a second phase unit of a modular multilevel converter according to an embodiment of the invention;
Fig. 6 illustrates a single phase modular multilevel converter according to an embodiment;
Fig. 7 illustrates a three phase modular multilevel converter according to an embodiment;
Figs. 8 and 9 illustrate further embodiments of phase units of a modular multilevel converter according to an embodiment of the invention;

The illustrations of the drawings are in schematic form. It is noted that in different figures, similar or identical elements use the same reference signs.

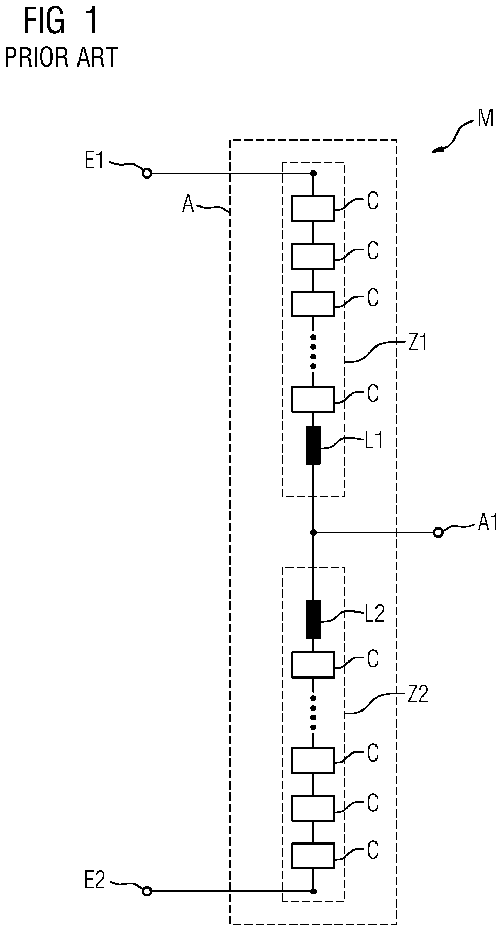

Fig. 1 illustrates a basic setup of a modular multilevel converter M for converting a DC voltage into an AC voltage or vice versa according to the prior art. Fig. 1 only shows a single phase unit A of the modular multilevel converter M. The phase unit A is connected to a DC line with DC terminals E1, E2 and has an AC terminal A1. The number of phase units A used in actual embodiments of such a modular multilevel converter M can be one, two, three or more. If the modular multilevel converter M comprises a plurality of phase units A these are typically arranged in parallel, i.e. the phase units A are each connected to the same DC line while their individual AC terminals A1 form the AC phase terminals.

Each phase unit A comprises an upper converter arm Z1 and a lower converter arm Z2, each converter arm Z1, Z2 having a plurality of two-terminal cells C being arranged in series. In addition, each converter arm Z1, Z2 comprises an inductive element in the form of coils L1, L2 in series with the series of cells C. The converter arms Z1, Z2 in turn are connected in series between the DC terminals E1, E2. In its most basic form the cells C comprise an energy storage element and a switching arrangement. The energy storage element is usually a capacitor. The switching arrangement enables the cell C to either short-circuit its two terminals, bypassing the energy storage, or place the energy storage element between its two terminals.

The modular multilevel converter M further comprises a control unit adapted to control the cells C of the phase units A to convert between the DC terminals E1, E2 and the AC terminals A1. To do this each cell C is adapted to generate a voltage step by charging its energy storage with the respective input voltage or from outside sources. The control unit is adapted to switch on part of the cells of one phase unit and to bypass the remainder of the cells of a phase unit A such that the sum of the voltage of the activated cells in the phase unit is equal to the direct current voltage. The ratio of activated cells C between the upper and lower converter arm Z1, Z2, sets the voltage at the AC terminal A1 of the phase unit. Varying the ratio in a sinusoidal manner may create a relatively smooth AC voltage at AC terminal A1.

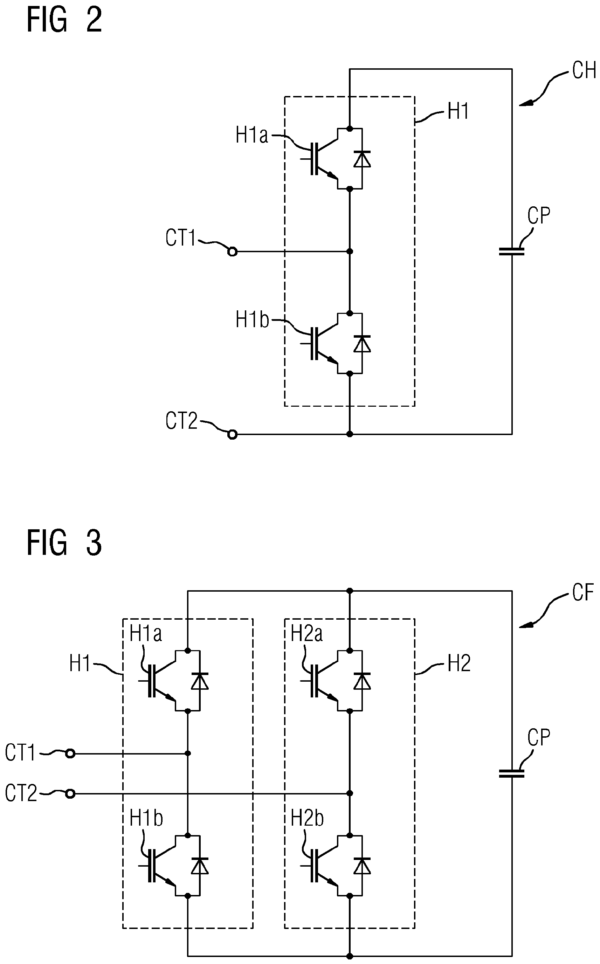

Fig. 2 shows an exemplary cell CH. Cell CH is a half-bridge cell. It comprises a half-bridge H1 of two serially connected switches H1a, H1b. The switches H1a, H1b may be IGBTs or other kinds of semiconductor switches. A capacitor CP is arranged in parallel to the half-bridge H1. A first terminal CT1 of the half-bridge cell CH is formed by the node between the switches H1a, H1b of the half-bridge H1. A second terminal CT2 of the half-bridge cell CH is formed by one of the outer nodes of the half-bridge H1, in Fig. 2 by the lower node of switch H1a. The half-bridge cell CH is the simplest form of a cell C for a modular multilevel converter M and it is able to bypass the capacitor CP by activating switch H1a and it is able to place capacitor CP in a single polarity between its terminals CT1, CT2 by turning off switch H1a and turning on switch H1b.

Fig. 3 shows an exemplary cell CF. Cell CF is a full-bridge cell. It comprises two half-bridges H1, H2 of two serially connected switches H1a, H1b, H2a, H2b each. A capacitor CP is arranged in parallel to the half-bridges H1, H2. As with the half-bridge cell CH, a first terminal CT1 of the full-bridge cell CF is formed by the node between the switches H1a, H1b of the half-bridge H1. Contrary to the half-bridge cell CH, the second terminal CT2 of the full-bridge cell CF is formed by the node between the switches H2a, H2b of the second half-bridge H2. The full-bridge cell CF is able to bypass the capacitor CP by activating one switch of each of the half-bridges H1, H2. Additionally, it is able to place capacitor CP between its terminals CT1, CT2 in both polarities. It is thus a cell C with extended capability but also an increased number of switches.

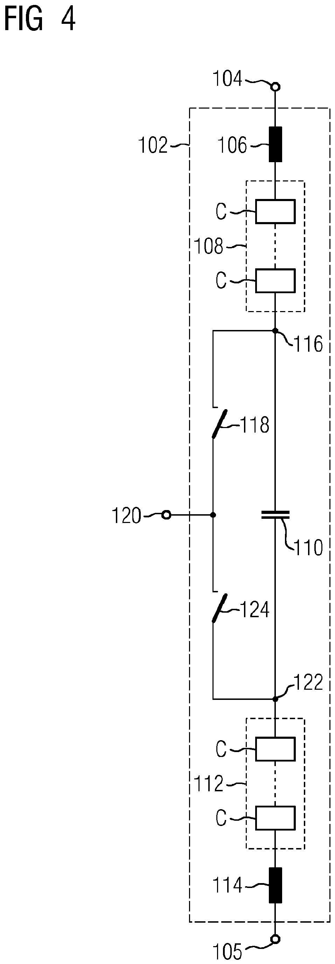

Fig. 4 shows a phase unit 102 of a modular multilevel converter 100 according to an embodiment of the invention. The phase unit 102 comprises a first and second DC terminal 104, 105 for connection to a DC voltage such as a DC link. Arranged between the DC terminals 104, 105 is a series comprising a first inductivity 106, an upper converter arm 108, a middle capacitor 110, a lower converter arm 112 and a second inductivity 114. The node 116 between the upper converter arm 108 and the middle capacitor 110 is connected to an upper switch arrangement 118 and past the upper switch arrangement 118 to an AC terminal 120. The node 122 between the lower converter arm 112 and the middle capacitor 110 is connected to a lower switch arrangement 124 and past the lower switch arrangement 124 to the AC terminal 120.

As with the modular multilevel converter M of Fig. 1 the upper and lower converter arm 108, 112 each comprise at least one cell C, but typically a series of cells C that may be of any cell type such as the half-bridge cell CH or the full-bridge cell CF. The upper and lower converter arm 108, 112 may also contain parallel connections of cells C.

In the cells C the cell capacitor and the switches are arranged so that the cell capacitor can be either connected in series or switched out of the series connection. In contrast, the middle capacitor 110 cannot be switched out of the series connection between the upper and lower converter arm 108, 112 as there is no series switch arranged to block current through the middle capacitor 110 and commutate the current completely to the switch arrangements 118, 124. In other words, the middle capacitor 110 and the upper and lower switch arrangement 118, 124 do not form a converter cell C.

The control unit of the modular multilevel converter 100 controls the cells C as well as the switch arrangements 118, 124 to adjust to the DC and AC voltages at the terminals 104, 105, 120. In the exemplary case of a DC to AC voltage conversion this means the required number of cells C are switched to an active state where the capacitor CP is not bypassed to generate the required instant value of the AC voltage. In a conventional MMC, when the number of cells in a phase unit is 2^{∗}N, i.e. N cells in each of the arms 108, 112, exactly N cells will typically be active. Thus, the charge of the cell capacitors is such that each is at a voltage of V_{DC} / N, where V_{DC} is the DC link voltage. When the number of active cells in the upper converter arm 108 is N_{A}, then the number of active cells N_{L} in the lower converter arm must be N_{L} = N - N_{A}. Since any number of cells from 0 to N can be active in the upper converter arm 108 and each such number produces a different voltage level at the AC terminal 120, the number of different voltage levels is equal to N + 1. The number of switches in the AC conduction path of the phase unit 202, which is between the AC terminal 120 and the upper DC link terminal 104, is one per cell in the case of half-bridge cells, i.e. N switches.

In the present embodiment, there is the additional middle capacitor 110 which will always be present in the DC conduction path between the DC link terminals 104, 105. This raises the number of capacitors between the DC link terminals 104, 105, i.e. active cells C plus middle capacitor 110, to N + 1. The voltage of each capacitor is therefore V_{DC} / (N + 1).

Adding the middle capacitor 110 to the lower converter arm 112 is done by switching on the upper switch arrangement 118 and switching off the lower switch arrangement 124. Adding the middle capacitor 110 to the upper converter arm 108 is done by switching off the upper switch arrangement 118 and switching on the lower switch arrangement 124.

In the following, ramping up the voltage at the AC terminal 120 from the lowest possible voltage (V_{DC-}) to the highest possible voltage (V_{DC+}) is described. For the voltage at the AC terminal to be at the level of V_{DC-}, all cell capacitors of the lower converter arm 112 must be short-circuited, i.e. the cells must be inactive. In addition, the lower switch arrangement 124 must be turned on while the upper switch arrangement 118 must be turned off.

To increase the voltage at the AC terminal 120, for each voltage step one of the cells C of the lower converter arm 112 is then turned active, i.e. the capacitor switched into the series connection of the cells C while one of the cells of the upper converter arm 108 is deactivated. Doing this for each of the cells of the lower converter arm 112 yields N + 1 voltage levels with the highest voltage level reached when all cells C of the lower converter arm 112 are active and all cells C of the upper converter arm 108 are inactive. At this point the voltage at the AC terminal 120 is still not at the highest possible level of V_{DC+} as the middle capacitor is still between the AC terminal 120 and the upper DC link terminal 104.

Now the switching state of the switch arrangements 118, 124 can be reversed by turning on the upper switch arrangement 118 and turning off the lower switch arrangement 124. This effectively moves the middle capacitor 110 to the cells C of the lower converter arm 112 and short-circuits the path from the AC terminal 120 to the upper DC link terminal 104, setting the output voltage to V_{DC+} and adding another voltage level to yield a total number of N + 2 voltage levels.

Lowering the voltage again may be done by activating the cells C of the upper converter arm 108 and deactivating those of the lower converter arm 112. When all cell states have been reversed the switch arrangements 118, 124 can also be reversed again to reach V_{DC-} as an output voltage.

From this description it may be seen that the state of the switch arrangements 118, 124 needs to change only twice per full wave of the AC frequency, i.e. at double the AC voltage frequency. This frequency may e.g. be 100 Hz or 120 Hz and is low compared to the frequency at which the states of cells C changes. Therefore, the switch arrangements 118, 124 can be advantageously constructed using switches optimized for low conduction losses. Switch arrangements 118, 124 can for example be constructed using IGCTs.

The converter of this embodiment thus reaches N + 2 voltage levels with 2N cells and the middle capacitor 110 and switch arrangements 118, 124. A conventional MMC able to reach the same number of voltage levels would require 2N + 2 cells. Since two cells comprise at least two cell capacitors and four switches the converter of this embodiment reduces the number of components by two switches and one capacitor. In both converters the number of switches in the AC conduction path is equal to N + 1, but in the converter of the embodiment of Fig. 4 one of the switches may be optimized for low conduction losses thus reducing these losses over the conventional MMC.

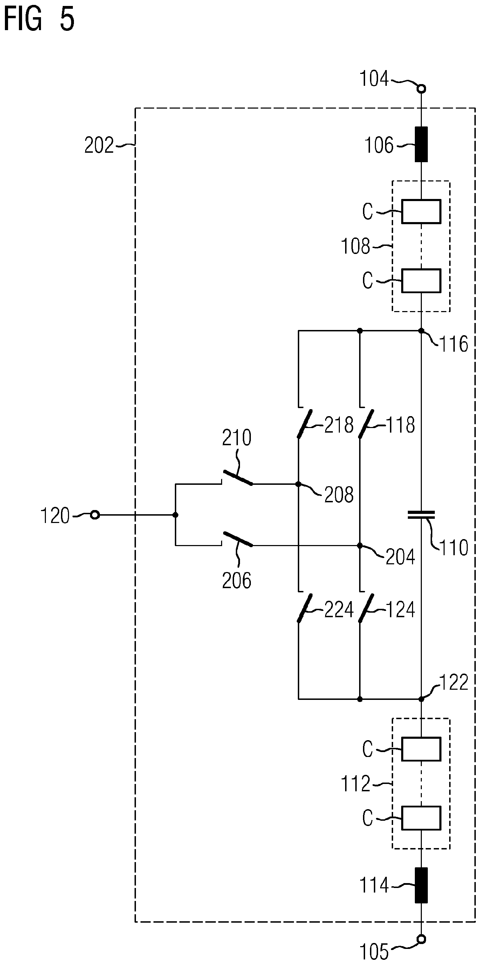

Fig. 5 shows a second exemplary embodiment of a phase unit 202 of a modular multilevel converter 100. Phase unit 202 comprises the elements of the phase unit 102 of Fig.4 as well as additional elements.

The upper and lower switch arrangements 118, 124 are connected at node 204. In the phase unit 202 of Fig. 5 node 204 is connected to the AC terminal 120 not directly but across a disconnecting switch 206.

In addition, phase unit 202 comprises a second upper switch arrangement 218 and a second lower switch arrangement 224. The second switch arrangements 218, 224 are arranged similarly to the switch arrangements 118, 124, i.e. the node 116 between the upper and the middle converter arm 108, 110 is connected to the second upper switch arrangement 218. The node 122 between the lower and the middle converter arm 110, 112 is connected to the second lower switch arrangement 224. The other terminals of the second switch arrangements 218, 224 are connected at node 208. Node 208 is connected to the AC terminal 120 through a disconnecting switch 210.

Phase unit 202 thus adds a secondary current path through the switch arrangements 118, 124, 218, 224. This secondary current path reduces the conduction losses that occur under normal circumstances. During normal operation, disconnecting switches 206, 210 are typically left in a closed state, i.e. conductive.

Additionally, the secondary current path reduces the chance of failure of the phase unit 202. The cells C of modular multilevel converters are usually built so that a single failure of a switch will only render the individual cell C non-functional, leaving the modular multilevel converter with only a small reduction of capability. If the modular multilevel converter is built with redundant cells C, i.e. with more cells C than necessary for normal operation, a single failure will not change its capabilities at all. In the phase unit 102 of Fig. 4 however a failure of a switch arrangement 118, 124 may leave the phase unit 102 with a heavy reduction of capability or non-functional. A failure of a switch arrangement 118, 124, 218, 224 in phase unit 202 of Fig. 5 however will not leave phase unit 202 non-functional. If a failure of a switch arrangement 118, 124, 218, 224 leaves the switch arrangement 118, 124, 218, 224 non-conductive, the respective parallel switch arrangement 118, 124, 218, 224 may take the full current to the respective node 116, 122. In this case only the conduction losses are increased but the function of phase unit 202 is unchanged. If the failure leaves switch arrangement 118, 124, 218, 224 short-circuited, the respective disconnecting switch 206, 210 may be opened to disconnect the particular switch arrangement 118, 124, 218, 224. This disconnects both the respective upper and lower switch arrangement 118, 124, 218, 224 which again increases conduction losses but leaves phase unit 202 otherwise fully functional.

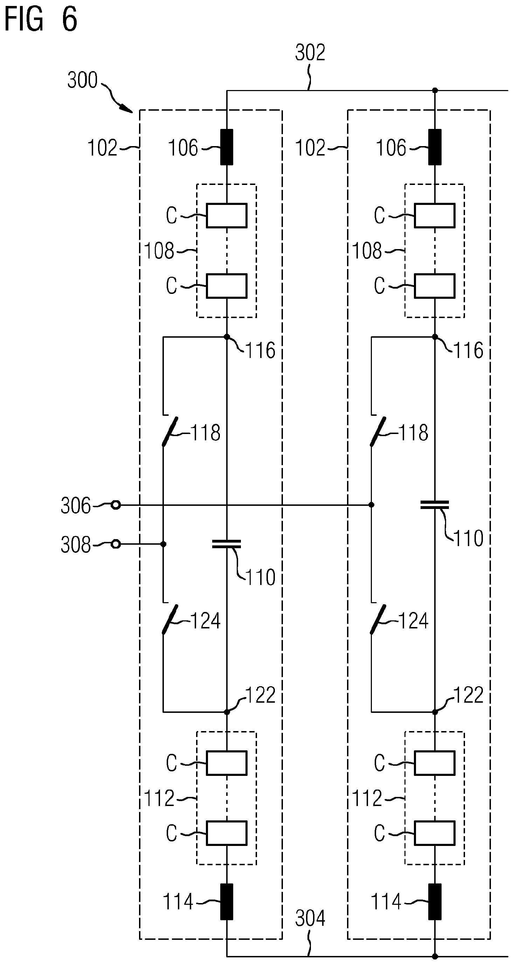

Fig. 6 shows a single phase modular multilevel converter 300 built from phase units 102 of Fig. 4. The single phase modular multilevel converter 300 uses two such phase units 102 in parallel arrangement. The phase units 102 are connected to DC link lines 302, 304 and the AC terminals 120 of the phase units form AC terminals 306, 308 of the single phase modular multilevel converter 300. Alternatively to using the phase units 102 of Fig. 4, phase units 202 of Fig. 5 could be used in the single phase modular multilevel converter 300. In another alternative embodiment only one phase unit 102, 202 is used in the single phase converter while in the place of the second phase unit a half-bridge switched at low frequencies, i.e. a two-level converter part is used. For some applications this results in better efficiency and lower cost.

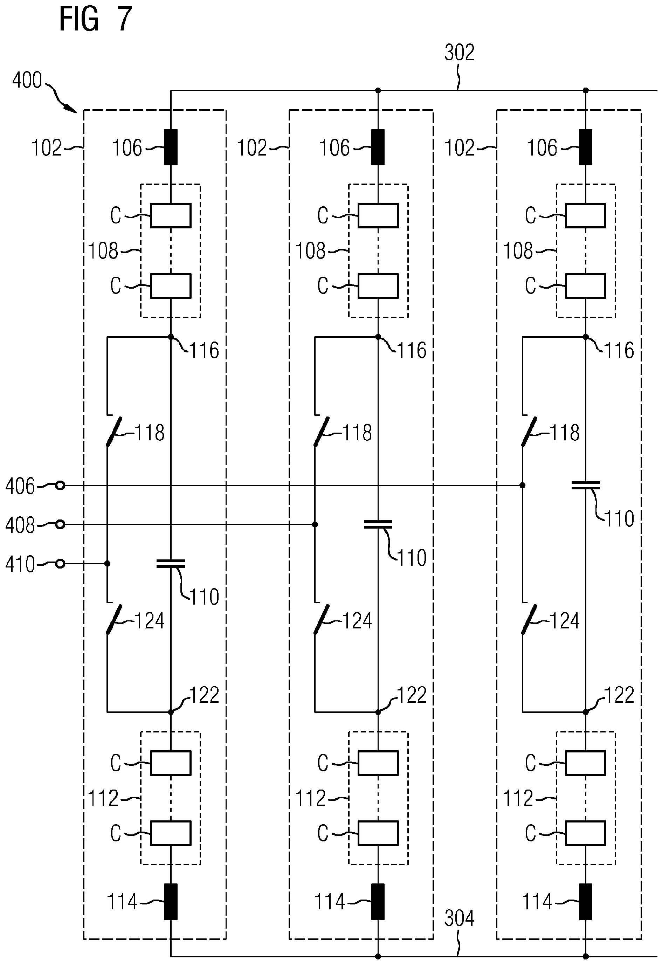

Fig. 7 shows a three-phase modular multilevel converter 400, again built from phase units 102 of Fig. 4. The three-phase modular multilevel converter 400 uses three phase units 102 in parallel arrangement. The phase units 102 are connected to DC link lines 302, 304 and the AC terminals 120 of the phase units form AC terminals 406, 408, 410 of the three-phase modular multilevel converter 400. Alternatively to using the phase units 102 of Fig. 4, phase units 202 of Fig. 5 could be used in the three-phase modular multilevel converter 400.

Specific embodiments of the single phase modular multilevel converter 300 or the three-phase modular multilevel converter 400 may use an inductive element L1, L2 on the outside, i.e. close to the DC terminals 104, 105 as shown in Figs. 4 to 7. Alternatively the inductive elements L1, L2 could be arranged differently, such as close to the AC terminals 120 or as smaller inductive elements within the cells C or between the cells C.

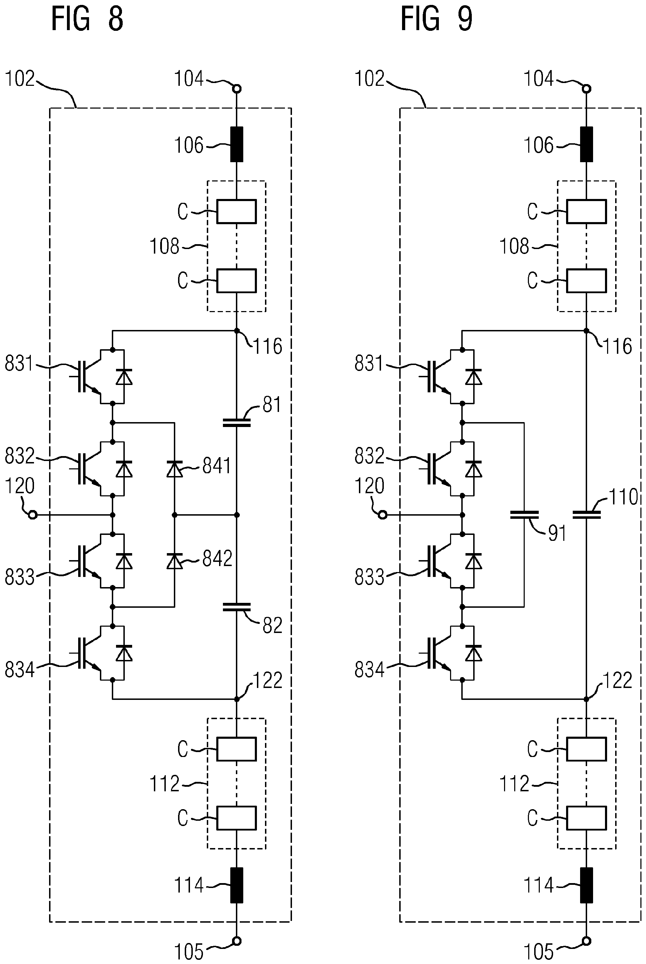

Fig. 8 shows a third exemplary embodiment of a phase unit 202 of a modular multilevel converter 100. Phase unit 202 comprises most of the elements of the phase unit 102 of Fig.4 with some differences in the circuit area between the upper and lower converter arms 108, 112. Instead of the single middle capacitor 110 a series of two middle capacitors 81, 82 is connected directly between nodes 116, 122. Connected in parallel to this series is a series of four IGBT-type switches 831...834. The middle potential point between the second and third IGBT 832, 833 is connected to the AC terminal 120 of the phase unit 202. A series of two diodes 841, 842 is connected between the node between the first and second IGBT 831, 832 and the node between the third and fourth IGBT 833, 834. The points between the diodes 841, 842 and between the capacitors 81, 82 are connected.

Thus, the embodiment of Fig. 8 comprises an NPC converter type circuit between the upper and lower converter arm 108, 112. The NPC converter circuit can generate three voltage levels as opposed to the middle capacitor 110 and switch arrangements 118, 124 of Fig.4 which can generate two voltage levels. Thus the number of voltage levels that can be reached with this embodiment is N + 3 when both converter arms 108, 112 together have 2N cells. A conventional MMC would require N + 2 cells per arm, i.e. 2N + 4 cells to reach the same number of voltage levels. Thus, this embodiment of the converter saves 4 cells while adding two diodes, four switches and two capacitors which is close to the equivalent of only two cells.

A variation of the embodiment of Fig. 8 is shown in Fig. 9. Instead of the NPC converter circuit between the converter arms 108, 112 this embodiment of the converter uses a flying capacitor circuit which comprises a middle capacitor 110 and a series of four switches 831...834 parallel to the middle capacitor 110. As with the embodiment of Fig.8, the AC terminal 120 is connected to the point between the second and third switch 832, 833. A flying capacitor 91 is connected between the node between the first and second IGBT 831, 832 and the node between the third and fourth IGBT 833, 834. Similarly to the embodiment of Fig. 8, this embodiment adds two voltage levels at the cost of four switches and two capacitors, which is an overall reduction of components of around two cells.

### List of reference signs

- M, 300, 400: Modular multilevel converter
- A, 102, 202: Phase unit
- C: Converter Cell
- L1, L2, 106, 114: Arm inductance
- E1, E2, 104, 105: DC link terminal
- 302, 304: DC link lines
- A1, 120, 306, 308, 406, 408, 410: AC terminal
- Z1, 108: Upper converter arm
- Z2, 112: Lower converter arm
- H1a, H1b, H2a, H2b: Semiconductor switch
- H1, H2: Half-bridge
- CT1, CT2: Cell terminal
- CP: Cell capacitor
- CF: Full-bridge cell
- CH: Half-bridge cell
- 116, 122: Node
- 110: Middle capacitor
- 118: Upper switch arrangement
- 124: Lower switch arrangement
- 218: Second upper switch arrangement
- 224: Second lower switch arrangement
- 206, 210: Disconnecting switches
- 831...834: IGBT
- 841, 842: Diode
- 81, 82: Capacitors
- 91: Flying capacitor

## Claims

1. A modular multilevel converter (300, 400) for converting between a DC voltage and an AC voltage, comprising at least one phase unit (102, 202), the phase unit (102, 202) comprising:
- three terminals (120, 306, 308, 406, 408, 410, 104, 105), wherein a first and second of the terminals (104, 105) are connectable to the DC voltage,
- an upper converter arm (108) and a lower converter arm (112), each converter (108, 112) arm having one or more cells (C) being arranged in series, wherein each cell (C) comprises a cell capacitor (CP) and a switching arrangement adapted to switching the cell capacitor (CP) in or out of the series of cells (C),
- a capacitor series of one or more capacitors (110, 81, 82), wherein the upper converter arm (108), the capacitor series and the lower converter arm (112) are arranged in a series connection between the first and second terminal (104, 105),
- a switch series comprising an upper switch arrangement (118) in series with a lower switch arrangement (124), the switch series being arranged parallel to the capacitor series, the connection point between the upper and lower switch arrangement (118, 124) forming the third terminal (120, 306, 308, 406, 408, 410) of the phase unit (102, 202).

2. The modular multilevel converter (300, 400) of claim 1, wherein the upper switch arrangement (118) and the lower switch arrangement (124) each comprise a semiconductor switch.

3. The modular multilevel converter (300, 400) of claim 2, comprising one or more additional switch series of two semiconductor switches each, wherein the additional switch series are arranged in parallel to each other and to the switch series, the converter (300, 400) further comprising a control unit adapted to control the semiconductor switches of the switch arrangements (118, 124, 218, 224) for interleaved operation.

4. The modular multilevel converter (300, 400) of claim 1, wherein the upper switch arrangement (118) and the lower switch arrangement (124) each comprise two semiconductor switches connected in series.

5. The modular multilevel converter (300, 400) of claim 4, wherein
- the capacitor series comprises two capacitors (81, 82),
- a series connection of two diodes (841, 842) connects the midpoint between the two semiconductor switches of the upper switch arrangement (118, 124) to the midpoint between the two semiconductor switches of the lower switch arrangement (124),
- the midpoint between the diodes (841, 842) is connected to the midpoint between the capacitors (81, 82) of the capacitor series.

6. The modular multilevel converter (300, 400) of claim 4, wherein a flying capacitor (91) connects the midpoint between the two semiconductor switches of the upper switch arrangement (118) to the midpoint between the two semiconductor switches of the lower switch arrangement (124).

7. The modular multilevel converter (300, 400) of one of the preceding claims, wherein the capacitors (110, 81, 82) of said capacitor series have a smaller capacity than the cell capacitors (CP) of the lower or upper converter arm (108, 112) .

8. The modular multilevel converter (300, 400) of one of the preceding claims, wherein the semiconductor switches of the upper and lower switch arrangement (118, 124) are optimized for low conduction losses.

9. The modular multilevel converter (300, 400) of one of the preceding claims, wherein the upper and lower switch arrangement (118, 124) each comprise one or more thyristors with reverse diodes.

10. The modular multilevel converter (300, 400) of one of the preceding claims comprising three or more of said phase units (A, 102, 202) being arranged in parallel.

11. The modular multilevel converter (300, 400) of one of the preceding claims comprising
- a second upper switch arrangement (218) arranged between said upper node (116) and an AC terminal (120, 306, 308, 406, 408, 410),
- a second lower switch arrangement (224) arranged between said lower node (122) and said AC terminal (120, 306, 308, 406, 408, 410).

12. The modular multilevel converter (300, 400) of claim 10 comprising a first disconnector (206) between the middle point of the upper and lower switch arrangement (118, 124) and the AC terminal (120, 306, 308, 406, 408, 410) and a second disconnector (210) between the middle point of the second upper and lower switch arrangement (218, 224) and the AC terminal (120, 306, 308, 406, 408, 410).

13. A method for operating the modular multilevel converter (300, 400) of one of the preceding claims, wherein
- the upper switch arrangement (118) is turned on when the lower converter arm voltage is higher than the upper converter arm voltage, and
- the lower switch arrangement (124) is turned on when the lower converter arm voltage is lower than the upper converter arm voltage.

14. The method of claim 13, wherein the switch arrangements (118, 124) are switched with a frequency that is twice the AC voltage frequency.
